# EUROPÄISCHE PATENTANMELDUNG

(11) **EP 3 088 435 A1**
(43) Veröffentlichungstag der Anmeldung: **02.11.2016**
(21) Anmeldenummer: 15165512.3
(22) Anmeldetag: 28.04.2015
(51) Int. Cl.: C08G 18/48, C08G 18/76, C08G 18/10, C09J 175/08

(54) **ZWEISTUFIGES VERFAHREN ZUR HERSTELLUNG EINES POLYURETHAN-HEISSSCHMELZKLEBSTOFFS MIT NIEDRIGEM GEHALT AN MONOMEREN DIISOCYANATEN UND HOHER ANFANGSFESTIGKEIT**

(71) Anmelder: Sika Technology AG, 6340 Baar (CH)
(72) Erfinder: Schmider, Martin, 22303 Hamburg (DE)
(74) Vertreter: Sika Patent Attorneys

(57) **Zusammenfassung**

Beschrieben wird ein zweistufiges Verfahren zur Herstellung eines Polyurethan-Heissschmelzklebstoffs, umfassend A) das Umsetzen von mindestens einem Polyol mit mindestens einem Diisocyanat, wobei das NCO/OH-Verhältnis größer 1,5 ist, um eine Reaktionsmischung enthaltend ein Isocyanat-funktionelles Polyurethan-Prepolymer und nicht umgesetztes Diisocyanat zu erhalten, und B) das Umsetzen der in Stufe A) erhaltenen Reaktionsmischung enthaltend das Isocyanat-funktionelle Polyurethan-Prepolymer und nicht umgesetztes Diisocyanat mit mindestens einem Polyesterpolyol, wobei das NCO/OH-Verhältnis größer 3 ist.

Der erhaltene Heissschmelzklebstoff kann als R-40 - klassifizierungsfreier sowie lagerungs- und verarbeitungsstabiler PUR-RHM mit einem Restmonomergehalt unter 1 Gew.-% formuliert werden und weist eine gute Anfangsfestigkeit auf.

## Beschreibung

### Technisches Gebiet

Die Erfindung betrifft das Gebiet der Polyurethan-Heissschmelzklebstoffe (PUR-RHM).

### Stand der Technik

Reaktive Polyurethan-Zusammensetzungen, die sich als Heissschmelzklebstoffe einsetzen lassen, sind bekannt (PUR-RHM). Sie bestehen meist aus Isocyanat-terminierten Polyurethan-Prepolymeren, die durch Umsetzung geeigneter Polyole mit einem Überschuss an Diisocyanaten erhalten werden. Solche Klebstoffe bauen unmittelbar nach ihrer Applikation durch Abkühlen eine hohe Anfangshaftfestigkeit auf und erhalten ihre Endeigenschaften, insbesondere Wärmestandfestigkeit und Beständigkeit gegenüber Umwelteinflüssen, durch die allmählich ablaufende "Aushärtung", d.h. die chemische Reaktion der Isocyanatgruppen mit Luftfeuchtigkeit.

Bedingt durch die bei der Prepolymerisierungsreaktion entstehende Molmassenverteilung enthalten solche PUR-RHM bedeutende Mengen an nicht umgesetzten monomeren Diisocyanaten ("Monomere"), welche bei den bei Heissschmelzklebstoffen üblichen Applikationstemperaturen von 85 bis 200 °C, typischerweise 120 bis 160 °C, ausgasen und als reizende, sensibilisierende oder toxische Stoffe eine Gesundheitsbelastung für den Verarbeiter darstellen können.

In der EU verlangt der Gesetzgeber, dass Produkte als schädlich (Xn) zu kennzeichnen sind, wenn deren Monomergehalt die Grenze von 0,1 Gew.-% überschreitet. Des Weiteren sind diese Produkte ab einer Konzentration von monomeren MDI von >1% mit einem zusätzlich R-Satz zu kennzeichnen: R-40 - Verdacht auf krebserregende Wirkung. Aus diesen Gründen wurden verschiedene Anstrengungen unternommen, den Monomergehalt in reaktiven PUR-RHM zu vermindern.

Ein naheliegender Ansatz ist die physikalische Entfernung des Monomers durch Destillation oder Extraktion, beschrieben z.B. in WO 01/14443 A1 und WO 01/40340 A2 (Destillation) sowie US 6133415, DE 19616046 A1 und EP 0337898 A1 (Extraktion). Diese Methoden sind apparativ aufwendig und deshalb teuer; zudem sind sie nicht für alle Monomere gut anwendbar.

Ein anderer Ansatz besteht in der Verwendung von speziellen Diisocyanaten mit unterschiedlich reaktiven Isocyanat-Gruppen, beschrieben z.B. in WO 03/033562 A1, WO 03/006521 A1 und WO 03/055929 A1. Insbesondere wird die Verwendung eines unsymmetrischen MDI-Isomers, 2,4'-Diphenylmethandiisocyanat, beschrieben, mit welchem sich auf einfache Art Prepolymere mit niedrigem Monomergehalt bei tiefer Viskosität erhalten lassen. Nachteilig an diesem Verfahren ist die ungenügende Verfügbarkeit von geeigneten Monomeren im technischen Maßstab, verbunden mit einem hohen Preis. Zusätzlich sind Einbußen bei der Aushärtungsgeschwindigkeit hinzunehmen, da für die Aushärtungsreaktion zur Hauptsache nur noch die Isocyanatgruppen mit der geringeren Reaktivität zur Verfügung stehen.

Schließlich besteht ein Ansatz darin, bei der Prepolymerisierung anstelle der monomeren Diisocyanate Addukte oder Oligomere davon einzusetzen, um die Flüchtigkeit zu vermindern, beschrieben z.B. in WO 01/40342 A1 und DE 4429679 A1. Hier ergeben sich Nachteile bei der Viskosität und der Reaktivität der so hergestellten Produkte.

Der Einsatz von latenten Härtern wie z.B. SikaHärter^{®}LG, ist in WO 2007/036575 A1 beschrieben. Durch diese Technologie ist es möglich kennzeichnungsfreie und lagerungsstabile PUR-RHM zu formulieren. Bei diesem Ansatz ergeben sich Nachteile im Emissionsverhalten (VDA 278). Die so formulierten Produkte können aufgrund hoher Emissionen im VOC und FOG nicht für Automobilanwendungen eingesetzt werden, da die Emission der Klebstoffe die Grenzwerte bei weitem überschreitet.

Der Einsatz von Silanen, z.B. Mercaptosilanen, ist bekannt. Durch diese Technologie ist es möglich, R-40-freie oder kennzeichnungsfreie PUR-RHM zu formulieren. Bei diesem Ansatz ergeben sich Nachteile im Emissionsverhalten (VDA 277) durch das Methanol, welches bei der Aushärtereaktion als Kondensationsprodukt abgespaltet wird. Ein weiterer Nachteil ist, dass die Silanchemie im Vergleich zur NCO-Wasser Aushärtereaktion weitaus langsamer bei niedrigen Temperaturen und Luftfeuchtigkeiten abläuft. Dieses führt bei der Anwendung im Automobilbau zu großen Nachteilen, da solche Klebstoffverbunde nach einer relativ kurzen Aushärtezeit Klimawechseltests bestehen müssen.

Der Einsatz von gestrippten Prepolymeren, z.B. Desmodur^{®}VPLS 2397, ist bekannt. Ein darauf basierendes PUR-RHM zeigt folgende Nachteile: Reduzierung des Wärmestandes und unzureichende Lagerstabilität, sowie geringere Haftung.

Eine als Heissschmelzklebstoff einsetzbare reaktive Polyurethan-Zusammensetzung (PUR-RHM), die auf Isocyanat-terminierten Prepolymeren beruht, welche in einem einfachen Verfahren ausgehend von Polyolen und technisch verfügbaren monomeren Diisocyanaten erhalten wird, und die einen niedrigen Gehalt an eben diesen Monomeren aufweist, lagerstabil und gut verarbeitbar ist und über niedrigere Emissionen im Vergleich zu oben genannten Ansätzen verfügt, sowie eine gute Durchhärtegeschwindigkeit bei niedrigen Temperaturen und Luftfeuchtigkeiten aufweist, ist bisher nicht bekannt.

### Darstellung der Erfindung

Aufgabe der vorliegenden Erfindung ist es daher, Polyurethan-Heissschmelzklebstoffe zur Verfügung zu stellen, die die vorstehend genannten

Nachteile nach dem Stand der Technik überwinden. Insbesondere sollte ein Heissschmelzklebstoff auf Basis einer reaktiven Polyurethan-Zusammensetzung (PUR-RHM) bereitgestellt werden, bei dem das Isocyanatterminierte Prepolymer in einem einfachen Verfahren ausgehend von Polyolen und technisch verfügbaren monomeren Diisocyanaten erhalten werden kann. Der Heissschmelzklebstoff soll trotzdem einen niedrigen Gehalt an monomeren Diisocyanaten und gleichzeitig eine gute Anfangsfestigkeit aufweisen. Desweiteren soll der Heissschmelzklebstoff lagerstabil und gut verarbeitbar sein und über niedrige Emissionen verfügen, sowie eine gute Durchhärtegeschwindigkeit bei niedrigen Temperaturen und Luftfeuchtigkeiten aufweisen.

Überraschenderweise wurde gefunden, dass die Aufgabe durch ein zweistufiges Verfahren gelöst werden kann, bei dem in einer ersten Stufe ein Polyol mit einem Diisocyanat in einem stöchiometrischen Isocyanat-Überschuss zu einem Isocyanat-funktionellen Polyurethan-Prepolymer umgesetzt wird, welches anschließend in einer zweiten Stufe mit einem Polyesterpolyol in einem großen stöchiometrischen Isocyanat-Überschuss umgesetzt wird.

Dementsprechend betrifft die Erfindung ein zweistufiges Verfahren zur Herstellung eines Polyurethan-Heissschmelzklebstoffs, umfassend
A) das Umsetzen von mindestens einem Polyol mit mindestens einem Diisocyanat, wobei das NCO/OH-Verhältnis größer 1,5 ist, um eine Reaktionsmischung enthaltend ein Isocyanat-funktionelles Polyurethan-Prepolymer und nicht umgesetztes Diisocyanat zu erhalten, und
B) das Umsetzen der in Stufe A) erhaltenen Reaktionsmischung enthaltend das Isocyanat-funktionelle Polyurethan-Prepolymer und nicht umgesetztes Diisocyanat mit mindestens einem Polyesterpolyol, wobei das NCO/OH-Verhältnis größer 3 ist.

Durch das erfindungsgemäße Verfahren wird eine Heissschmelzklebstoff-Zusammensetzung erhalten, die sich dadurch auszeichnet, dass sie durch die geeignete Wahl des Herstellungsprozesses (Zwei-Stufen-Prozess) einen niedrigen Gehalt an monomeren Diisocyanaten ("Monomere"), wie z.B. MDI, aufweist und dadurch eine höhere Verarbeitungssicherheit besitzt. Dadurch werden Arbeiter besser vor schädlichen Diisocyanat-Dämpfen geschützt. Der niedrige Monomergehalt ermöglicht die Formulierung von R-40 freien PUR-RHM, d.h. solche mit einem Monomergehalt von < 1,0 Gew.-%.

Gleichzeitig ergibt sich durch den besonderen Herstellungsprozess eine hohe Regularität in der Morphologie, wodurch ein PUR-RHM mit einer hohen Anfangsfestigkeit realisiert werden kann. Außerdem weist der erhaltene Heissschmelzklebstoff eine gute Vernetzungsdichte und Durchhärtegeschwindigkeit auf. Die erfindungsgemäße Zusammensetzung ist außerdem gut zu verarbeiten.

Es ergeben sich auch Vorteile bezüglich des Verfahrens. Der Herstellungsprozess ist einfach. Verglichen mit den herkömmlichen Standardverfahren sind keine besonderen Reaktoren oder Reaktionsbedingungen erforderlich. Auch die Aufarbeitung ist unkompliziert, zusätzliche Reinigungsschritte wie z.B. Abdestillation von monomeren Diisocyanaten oder selektive Extraktion der monomeren Diisocyanaten aus dem Reaktionsgemisch sind nicht erforderlich.

Weitere Aspekte der Erfindung sind der durch das Verfahren erhältliche PU-Heissschmelzklebstoff, dessen Verwendung, ein Verfahren zur Verklebung mit dem Heissschmelzklebstoff sowie ein durch dieses Verfahren erhaltener Artikel. Bevorzugte Ausführungsformen sind Gegenstand der abhängigen Ansprüche.

### Wege zur Ausführung der Erfindung

Die Vorsilbe "Poly" in Substanzbezeichnungen wie "Polyol" oder "Polyisocyanat" bezieht sich auf Substanzen, die formal zwei oder mehr der in ihrer Bezeichnung vorkommenden funktionellen Gruppe pro Molekül enthalten. Ein Polyol ist z.B. eine Verbindung mit zwei oder mehr Hydroxylgruppen und ein Polyisocyanat ist eine Verbindung mit zwei oder mehr Isocyanatgruppen.

Ein Prepolymer ist ein Polymer, das mindestens eine, gewöhnlich zwei oder mehr reaktionsfähige Gruppen, z.B. Isocyanatgruppen, enthält. Über die reaktionsfähigen Gruppen kann das Prepolymer kettenverlängert, vernetzt oder gehärtet werden.

Als Ausgangskomponenten werden hier im Folgenden die zur Herstellung des Polyurethan-Heissschmelzklebstoffs eingesetzten Polyole, Diisocyanate, Polyesterpolyole und, falls eingesetzt, Polyacrylate oder Polymethacrylate verstanden. Dies bezieht sich insbesondere auf die nachstehend angeführten Mengenangaben.

Unter dem mittleren Molekulargewicht wird hier das Zahlenmittel des Molekulargewichts verstanden, welches bestimmt wird durch GPC-Analyse (Gelpermeations-Chromatographie) gegenüber Polystyrol-Standard.

Das erfindungsgemäße Verfahren zur Herstellung eines Polyurethan-Heissschmelzklebstoffs umfasst eine erste Stufe A), bei dem mindestens ein Polyol, bevorzugt ein Polyetherpolyol, mit mindestens einem Diisocyanat, insbesondere einem monomeren Diisocyanat, umgesetzt wird, wobei das NCO/OH-Verhältnis größer 1,5 ist, um eine Reaktionsmischung enthaltend ein Isocyanat-funktionelles Polyurethan-Prepolymer und nicht umgesetztes Diisocyanat zu erhalten.

Es können ein oder mehrere Polyole eingesetzt werden. Geeignete Polyole sind z.B. Polyetherpolyole, Polyesterpolyole, Polycarbonatpolyole, Rizinusöl und dessen Derivate oder hydroxyfunktionelle Polybutadiene und Mischungen davon, wobei Polyetherpolyole, Polyesterpolyole und Polycarbonatpolyole bevorzugt sind. Bei den Polyolen handelt es sich bevorzugt um Diole oder Triole oder Mischungen davon. Besonders bevorzugt sind ein oder mehrere Diole, insbesondere ein oder mehrere Polyetherdiole, ein oder mehrere Polyesterdiole, ein oder mehrere Polycarbonatdiole und Mischungen davon.

Das Polyol, insbesondere die vorstehend angegebenen bevorzugten Polyole, weisen z.B. ein mittleres Molekulargewicht von mindestens 400 g/mol, bevorzugt mindestens 1000 g/mol auf, z.B. im Bereich von 400 bis 30'000 g/mol, bevorzugt von 1000 bis 8'000 g/mol.

Das Polyol ist besonders bevorzugt ein Polyetherpolyol. Es können ein oder mehrere Polyetherpolyole eingesetzt werden. Bei den Polyetherpolyolen handelt es sich z.B. um Diole oder Triole oder Mischungen davon. Besonders bevorzugt ist das Polyetherpolyol ein Polyetherdiol. Polyetherpolyole sind im Handel erhältlich.

Als Polyetherpolyol, auch Polyoxyalkylenpolyol genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder mehreren aktiven Wasserstoffatomen wie z.B. Wasser, Ammoniak oder Verbindungen mit mehreren OH- oder NH-Gruppen wie z.B. 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt z.B. mit Hilfe von sogenannten Double Metal Cyanide Complex Katalysatoren (DMC-Katalysatoren), als auch Polyoxyalkylenpolyole mit einem höheren Ungesättigtheitsgrad, hergestellt z.B. mit Hilfe von anionischen Katalysatoren wie NaOH, KOH oder Alkalialkoholaten.

Das Polyetherpolyol ist bevorzugt ein Polyoxyethylendiol, Polyoxyethylentriol, Polyoxypropylendiol, Polyoxypropylentriol oder eine Mischung davon. Das Polyetherpolyol ist bevorzugter ein Polyethylenoxid und/oder ein Polypropylenoxid. Am meisten bevorzugt ist das Polyetherpolyol Polypropylenoxid. Derartige Polyetherpolyole werden z.B. unter dem Handelsnamen Acclaim^{®} von Bayer vertrieben. Ebenfalls geeignet sind sogenannte Ethylenoxid-verkappte ("EO-endcapped" (ethylene oxide-endcapped)) Polyoxypropylendiole oder -triole. Dies sind Polyoxypropylenpolyoxyethylenpolyole, die z.B. dadurch erhalten werden, dass Polyoxypropylenpolyole nach Abschluss der Polypropoxylierung mit Ethylenoxid alkoxyliert werden und dadurch primäre Hydroxylgruppen aufweisen.

Das Polyetherpolyol, wie die die vorstehend angegebenen bevorzugten Polyetherpolyole, insbesondere Polypropylenoxid, weisen z.B. ein mittleres Molekulargewicht im Bereich von 400 bis 30'000 g/mol, bevorzugt von 1000 bis 8'000 g/mol und besonders bevorzugt von 1000 bis 4000 g/mol auf.

Als Polyol für die Stufe A) sind auch Polyesterpolyole geeignet. Es können ein oder mehrere Polyesterpolyole eingesetzt werden. Beispiele für geeignete Polyesterpolyole und deren zweckmäßigem Parameter für die Stufe A) sind diesselben, die auch für die Stufe B) eingesetzt werden können. Es wird daher auf die Angaben zu den Polyesterpolyolen für die Stufe B) verwiesen. Sofern für die Stufe A) ein Polyesterpolyol eingesetzt wird, kann es dasselbe sein wie das in Stufe B) verwendete Polyesterpolyol oder davon verschieden.

Bevorzugt als Polyole sind auch ein oder mehrere Polycarbonatpolyole. Als Polycarbonatpolyole geeignet sind z.B. jene, die durch Umsetzung beispielsweise der nachstehend genannten - zum Aufbau der Polyesterpolyole eingesetzten - zwei- oder dreiwertigen Alkohole mit Dialkylcarbonaten, Diarylcarbonaten oder Phosgen zugänglich sind. Besonders geeignet sind Polycarbonatdiole, insbesondere amorphe Polycarbonatdiole.

Weitere geeignete Polyole sind Rizinusöl und dessen Derivate oder hydroxyfunktionelle Polybutadiene, die z. B. unter dem Handelsnamen "Polybd" erhältlich sind.

Der Anteil des mindestens einen Polyols, wie die vorstehend genannten bevorzugten Polyole, insbesondere Polyetherpolyole, kann z.B. in einem Bereich von 10 bis 80 Gew.-%, bevorzugt 20 bis 60 Gew.-%, bezogen auf das Gesamtgewicht der Ausgangskomponenten, liegen.

Es können ein oder mehrere Diisocyanate, insbesondere monomere Diisocyanate, eingesetzt werden. Als Diisocyanate können z.B. aliphatische, cycloaliphatische oder aromatische Diisocyanate, insbesondere monomere Diisocyanate, verwendet werden, wobei aromatische monomere Diisocyanate bevorzugt sind. Es können die üblichen, im Handel erhältlichen Diisocyanate verwendet werden.

Ein monomeres Di- oder Polyisocyanat enthält insbesondere keine Urethangruppe. Nicht monomere Diisocyanate sind z.B. oligomere oder polymere Produkte von monomeren Diisocyanaten, wie z.B. Addukte von monomeren Diisocyanaten, die ebenfalls im Handel erhältlich sind. Bevorzugt ist aber der Einsatz monomerer Diisocyanate.

Beispiele für monomere Diisocyanate sind 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI) und Gemische dieser Isomeren, 1,10-Decamethylendiisocyanat, 1,12-Dodecamethylendiisocyanat, Lysin- und Lysinesterdiisocyanat, Cyclohexan-1,3- und -1,4-diisocyanat und Gemische dieser Isomeren, 1-Methyl-2,4- und -2,6-diisocyanatocyclohexan und Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI) und Gemische dieser Isomeren, 1,4- Diisocyanato-2,2,6-trimethylcyclohexan (TMCDI), 1,3-und 1,4-Bis-(isocyanatomethyl)-cyclohexan, m- und p-Xylylendiisocyanat (mund p-XDI) und Gemische dieser Isomeren, m- und p-Tetramethyl-1,3- und -1,4-xylylendiisocyanat (m- und p-TMXDI) und Gemische dieser Isomeren, Bis-(1-isocyanato-1-methylethyl)-naphthalin, 2,4- und 2,6-Toluylendiisocyanat und Gemische dieser Isomeren (TDI), 4,4'-, 2,4'- und 2,2'-Diphenylmethandiisocyanat und Gemische dieser Isomeren (MDI), 1,3- und 1,4-Phenylendiisocyanat und Gemische dieser Isomeren, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), sowie Mischungen der vorgenannten Isocyanate.

Bevorzugt sind MDI, TDI, HDI und IPDI. Besonders bevorzugt sind Diphenylmethandiisocyanat (MDI), insbesondere 4,4'-Diphenylmethandiisocyanat (4,4'-MDI). Dem Fachmann ist bekannt, dass die technischen Produkte von Diisocyanaten häufig Isomerengemische oder andere Isomere als Verunreinigungen enthalten können.

Das monomere Diisocyanat weist z.B. ein Molekulargewicht von nicht mehr als 1000 g/mol, bevorzugt nicht mehr als 500 g/mol, bevorzugter nicht mehr als 400 g/mol auf.

Der Anteil des mindestens einen Diisocyanats, insbesondere monomeren Diisocyanats, kann z.B. in einem Bereich von 5 bis 40 Gew.-%, bevorzugt 5 bis 20 Gew.-%, bezogen auf das Gesamtgewicht der Ausgangskomponenten, liegen.

In der zweiten Stufe B) wird als weitere Ausgangskomponente mindestens ein Polyesterpolyol eingesetzt. Bei den Polyesterpolyolen handelt es sich z.B. um Polyestertriole oder Polyesterdiole oder Mischungen davon. Besonders bevorzugt sind ein oder mehrere Polyesterdiole.

Geeignete Polyesterpolyole sind flüssige, amorphe oder kristalline Polyesterpolyole, wie Polyestertriole und insbesondere Polyesterdiole, und Mischungen dieser Polyesterpolyole, wobei das Polyesterpolyol bevorzugt ein kristallines Polyesterpolyol ist. Die Einteilung in flüssige, amorphe und kristalline Polyesterpolyole ist üblich und dem Fachmann bekannt. Entsprechende Produkte sind im Handel erhältlich, z.B. die Dynacoll^{®}7000 Serie von Evonik.

Die flüssigen Polyesterpolyole weisen eine Glasübergangstemperatur von unter 0°C, bevorzugt -5°C oder darunter, auf. Die amorphen Polyesterpolyole weisen eine Glasübergangstemperatur von mindestens 0°C auf. Die kristallinen Polyesterpolyole besitzen einen Schmelzpunkt, wobei der Schmelzpunkt bevorzugt mindestens 35°C, bevorzugter mindestens 50°C, beträgt. Die Glasübergangstemperatur (Tg) und der Schmelzpunkt (Smp) können gemäß DIN 53765 bestimmt werden.

Geignete Polyesterpolyole sind z.B. hergestellt sind aus zwei- oder dreiwertigen, bevorzugt zweiwertigen, Alkoholen, wie z.B. 1,2-Ethandiol, Diethylenglykol, Triethylenglykol, 1,2-Propandiol, 1,3-Propandiol, Dipropylenglykol, 1,4-Butandiol, 1,5-Pentandiol, 1,6-Hexandiol, 1,8-Octandiol, 1,10-Decandiol, 1,12-Dodecandiol, Dimerfettalkohol, Neopentylglykol, Glycerin, 1,1,1-Trimethylolpropan oder Mischungen der vorgenannten Alkohole, mit organischen Dicarbonsäuren oder Tricarbonsäuren, bevorzugt Dicarbonsäuren, oder deren Anhydriden oder Estern, wie z.B. Bernsteinsäure, Glutarsäure, 3,3-Dimethylglutarsäure, Adipinsäure, Korksäure, Sebacinsäure, Undecandisäure, Dodecandicarbonsäure, Azelainsäure, Maleinsäure, Fumarsäure, Phthalsäure, Dimerfettsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton, auch Polycaprolactone genannt.

Besonders geeignete Polyesterpolyole, insbesondere kristalline Polyesterpolyole, sind Polyesterpolyole aus Adipinsäure, Sebacinsäure oder Dodecandicarbonsäure als Dicarbonsäure und aus Hexandiol oder Neopentylglycol als zweiwertigen Alkohol. Besonders geeignete als kristalline Polyesterpolyole sind Adipinsäure/Hexandiol-Polyester und Dodecand icarbonsäu re/Hexand iol-Polyester.

Weitere Beispiele für geeignete Polyesterpolyole sind Polyesterpolyole oleochemischer Herkunft. Derartige Polyesterpolyole können z.B. durch vollständige Ringöffnung von epoxidierten Triglyceriden eines wenigstens teilweise olefinisch ungesättigte Fettsäure enthaltenden Fettgemisches mit einem oder mehreren Alkoholen mit 1 bis 12 C-Atomen und anschliessender partieller Umesterung der Triglycerid-Derivate zu Alkylesterpolyolen mit 1 bis 12 C-Atomen im Alkylrest hergestellt werden.

Die Polyesterpolyole, wie Polyestertriole und insbesondere Polyesterdiole, weisen z.B. ein mittleres Molekulargewicht von 1000 bis 15000 g/mol, bevorzugt von 1500 bis 8000 g/mol und bevorzugter von 1700 bis 5500 g/mol, auf.

Der Anteil des mindestens einen Polyesterpolyols kann z.B. in einem Bereich von 5 bis 70 Gew.-%, bevorzugt von 10 bis 50 Gew.-%, bezogen auf das Gesamtgewicht der Ausgangskomponenten, liegen.

In einer optionalen und bevorzugten Ausführungsform kann gegebenenfalls als weitere Ausgangskomponente mindestens ein Polyacrylat oder Polymethacrylat zugemischt werden. Es können ein oder mehrere Polyacrylate und/oder ein oder mehrere Polymethacrylate eingesetzt werden.

Das mindestens eine Polyacrylat oder Polymethacrylat kann, sofern eingesetzt, zu jedem beliebigen Zeitpunkt zugegeben werden, z.B. in oder nach der Stufe A) und/oder in oder nach der Stufe B). Sofern das mindestens eine Polyacrylat oder Polymethacrylat eingesetzt wird, ist es bevorzugt, die Umsetzung des mindestens einen Polyols mit dem mindestens einen Diisocyanat in Stufe A) in Anwesenheit von dem mindestens eine Polyacrylat oder Polymethacrylat durchzuführen. Hierfür wird bevorzugt das mindestens eine Polyol mit dem mindestens eine Polyacrylat oder Polymethacrylat gemischt und zu der erhaltenen Mischung das mindestens eine Diisocyanat zugesetzt. Polyacrylate und Polymethacrylate sind im Handel erhältlich. Eine zusammenfassende Darstellung über Polyacrylate und Polymethacrylate findet sich z.B. in Ullmanns Encyklopädie der technischen Chemie, Verlag Chemie, 4. Auflage, Bd. 19, Seiten 7-30.

Das Polyacrylat oder Polymethacrylat ist ein Homopolymer oder Copolymer von mindestens einem Acrylsäureester und/oder mindestens einem Methacrylsäureester und gegebenenfalls weiteren Comonomeren. Ein Copolymer von Acrylsäureester wird als Polyacrylat bezeichnet, auch wenn es einen Methacrylsäureester als Comonomer umfasst. Das Polyacrylat oder Polymethacrylat ist bevorzugt ein Perlpolymerisat.

Acrylsäureester und Methacrylsäureester sind z.B. C₁₋₁₂-Alkylacrylat, bevorzugt C₁₋₄-Alkylacrylat, bzw. C₁₋₁₂-Alkylmethacrylat, bevorzugt C₁₋₄-Alkylmethacrylat. Acrylsäureester oder Methacrylsäureester ohne eine zusätzliche funktionelle Gruppe sind bevorzugt. Gegebenenfalls können die Acrylsäureester und Methacrylsäureester aber auch eine zusätzliche funktionelle Gruppe wie ein Carboxylgruppe oder Hydroxylgruppe aufweisen. Diese werden aber in der Regel, falls eingesetzt, zusammen mit mindestens einem Acrylsäureester oder Methacrylsäureester ohne eine zusätzliche funktionelle Gruppe eingesetzt.

Beispiele für Acrylsäureester und Methacrylsäureester sind Methylacrylat, Ethylacrylat, n-Butylacrylat, tert-Butylacrylat, iso-Butylacrylat, 2-Ethylhexylacrylat, Laurylacrylat, Methylmethacrylat, Ethylmethacrylat und n-Butylmethacrylat. Beispiele für Acrylsäureester oder Methacrylsäureester mit einer zusätzlichen funktionellen Gruppe sind Maleinsäure, 2-Hydroxyethylacrylat, 2-Hydroxyethylmethacrylat, Hydroxypropylacrylat, Propylenglykolmethacrylat, Butandiolmonoacrylat und Butandiolmonomethacrylat.

Beispiele für gegebenenfalls eingesetzte weitere Comonomere sind Styrol, Acrylnitril, Vinylacetat, Vinylpropionat und Vinylchlorid. Weitere optionale Comonomere, die sofern eingesetzt, häufig als Hilfsmonomere, d.h. in relativ geringen Mengen, eingesetzt werden, sind Acrylsäure, Methacrylsäure, Itaconsäure, Maleinsäure, Fumarsäure, Crotonsäure oder deren Amide.

Bevorzugte Poyacrylate oder Polymethacrylate sind Copolymere, die durch radikalische Polymerisation von einem oder mehreren Acrylsäureestern und/oder Methacrylsäureestern gegebenenfalls in Kombination mit einem oder mehreren OH-funktionellen Acrylsäureestern und/oder OH-funktionellen Methacrylsäureestern erhalten werden.

Das Polyacrylat oder Polymethacrylat ist bevorzugt ein Homopolymer oder Copolymer von mindestens einem Acrylsäureester, Methacrylsäureester, hydroxyfunktionellen Acrylsäureester, hydroxyfunktionellen Methacrylsäureester oder einer Kombination davon sowie gegebenenfalls mindestens einem weiteren Comonomer, wobei bevorzugt mindestens ein Acrylsäureester oder Methacrylsäureester keine zusätzliche funktionelle Gruppe aufweist.

Das Polyacrylat oder Polymethacrylat ist besonders bevorzugt ein Copolymer von Methylmethacrylat und n-Butylmethacrylat und gegebenenfalls mindestens einem weiteren Comonomer, wie z.B. einem hydroxyfunktionellen Acrylsäureester oder einem hydroxyfunktionellen Methacrylsäureester.

Geignete Polyacrylate oder Polymethacrylate sind z.B. unter der Serienbezeichnung Dynacoll^{®}AC von Evonik erhältlich.

Das Polyacrylat oder Polymethacrylat weist z.B. ein mittleres Molekulargewicht im Bereich von 10000 bis 200000g/mol, bevorzugt von 20000 bis 150000 g/mol, auf.

Der Anteil des mindestens einen Polyacrylats oder Polymethacrylats kann z.B. im Bereich von 0 bis 50 Gew.-% oder 1 bis 50 Gew.-%, bevorzugt von 5 bis 40 Gew.-%, bezogen auf das Gesamtgewicht der Ausgangskomponenten, liegen. In der ersten Stufe A) werden das mindestens eine Polyol, bevorzugt Polyetherpolyol, und das mindestens eine Diisocyanat in einem NCO/OH-Verhältnis von größer 1,5 umgesetzt. Das NCO/OH-Verhältnis ist das molare Verhältnis von Isocyanatgruppen zu Hydroxylgruppen in den in Stufe A) eingesetzten Ausgangskomponenten, d.h. insbesondere den Polyetherpolyolen und Diisocyanaten. Sofern die Umsetzung in Anwesenheit von dem mindestens einen Polyacrylat oder Polymethacrylat erfolgt und diese ebenfalls Hydroxygruppen aufweisen, die mit Isocyanatgruppen reagieren können, werden diese beim NCO/OH-Verhältnis berücksichtigt.

Das NCO/OH-Verhältnis in Stufe A) ist bevorzugt mindestens 1,7, bevorzugter mindestens 1,9 und besonders bevorzugt mindestens 1,95, wobei es bevorzugt nicht größer als 2,5, bevorzugter nicht größer als 2,2 ist. Das NCO/OH-Verhältnis in Stufe A) liegt bevorzugt im Bereich von größer 1,5 bis 2,5, besonders bevorzugt von 1,7 bis 2,2.

In Stufe A) kann in einer bevorzugten Ausführungsform die Umsetzung von Polyol und Diisocyanat in Anwesenheit von dem Polyacrylat oder Polymethacrylat erfolgen, z.B. indem Polyol mit dem Polyacrylat oder Polymethacrylat gemischt wird und anschließend das Diisocyanat zur Mischung gegeben wird. In einer bevorzugten Ausführungsform wird das Polyol in dem Polyacrylat oder Polymethacrylat gelöst, gegebenenfalls unter Erwärmen, und anschließend das Diisocyanat zur Mischung gegeben.

Die Umsetzung von Polyol und Diisocyanat in Stufe A) kann gemäß allgemein üblichen, dem Fachmann bekannten Verfahren zur Herstellung von Isocyanat-funktionellen Polyurethan-Prepolymeren durchgeführt werden.

Die Umsetzung des mindestens einen Polyols mit dem mindestens einen Diisocyanat, bevorzugt monomeren Diisocyanat, kann z.B. bei Temperaturen im Bereich von 60 bis 160 °C, bevorzugt von 80 bis 140°C, durchgeführt werden. Die Dauer der Umsetzung hängt naturgemäß von der eingesetzten Temperatur ab, kann aber z.B. 30 min bis 6 h, bevorzugt 30 min bis 3 h, bevorzugter 1 bis 1,5 h, betragen.

Für die Reaktion von Polyolen und Diisocyanaten können gegebenenfalls übliche Metallkatalysatoren verwendet werden, z.B. Bi-Katalysatoren, wie Coscat^{®}83 von Vertellus Performance Materials Inc., oder Sn-Katalysatoren.

Aus der Umsetzung wird eine Reaktionsmischung enthaltend ein Isocyanat-funktionelles Polyurethan-Prepolymer erhalten. In der Reaktionsmischung ist gegebenenfalls ferner das mindestens eine Polyacrylat oder Polymethacrylat enthalten, das in der Regel nicht an der Reaktion teilnimmt. Sofern das Polyacrylat oder Polymethacrylat Hydroxygruppen als zusätzliche funktionelle Gruppen aufweist, können über diese Umsetzungen mit dem Diisocyanat erfolgen. Bei der Umsetzung werden im wesentlichen alle Hydroxylgruppen des Polyols umgesetzt, z.B. mindestens 95%, in der Regel mindestens 99% der Hydroxylgruppen des Polyols.

In der Reaktionsmischung ist ferner nicht umgesetztes Diisocyanat, insbesondere monomeres Diisocyanat, enthalten. Das Umsetzungsprodukt weist in der Regel einen Gehalt an nicht umgesetztem Diisocyanat, insbesondere monomerem Diisocyanat, von z.B. 1,5 bis 5 Gew.-%, insbesondere etwa 2 bis 4 Gew.-%, bezogen auf das Gesamtgewicht der Reaktionsmischung, auf. Der Gehalt an in der Reaktionsmischung verbliebenen, nicht umgesetzten Diisocyanaten kann mittels HPLC (Detektion über Photodiodenarray) bestimmt werden.

Das Isocyanat-funktionelle Polyurethan-Prepolymer in der Reaktionsmischung kann z.B. eine mittlere Isocyanat-Funktionalität im Bereich von 1,8 bis 2,2 aufweisen.

In Stufe B) wird die in Stufe A) erhaltene Reaktionsmischung enthaltend eine Iscocyanat-funktionelles Polyurethan-Prepolymer und nicht umgesetztes Diisocyanat mit mindestens einem Polyesterpolyol umgesetzt, wobei das NCO/OH-Verhältnis größer 3 ist. Die in Stufe A) erhaltene Reaktionsmischung kann wie sie ist, d.h. ohne Aufbereitung, für die Stufe B) eingesetzt werden. Insbesondere wird nicht umgesetztes Diisocyanat nicht von der Reaktionsmischung abgetrennt. Abgesehen von dem in der Reaktionsmischung enthaltenem nicht umgesetztem Diisocyanat wird ferner insbesondere kein zusätzliches Diisocyanat zugegeben. Das zweistufige Verfahren kann vorzugsweise als Eintopfverfahren ausgeführt werden.

Das NCO/OH-Verhältnis in Stufe B) ist das molare Verhältnis von Isocyanatgruppen zu Hydroxylgruppen bezogen auf die Reaktionsmischung und dem zugesetzten Polyesterpolyol. Der Gehalt an Isocyanatgruppen in der Reaktionsmischung entspricht dem theoretischen NCO-Gehalt des Prepolymeren aus Stufe A). Der theoretische NCO-Gehalt errechnet sich wie üblich aus den in Stufe A) eingesetzten Mengen an Polyetherpolyol und Diisocyanat bei theoretisch vollständiger Umsetzung. OH-Gruppen, die mit Isocyanatgruppen reagieren können, sind in der aus der Stufe A) erhaltenen Reaktionsmischung im wesentlichen nicht mehr vorhanden.

Das NCO/OH-Verhältnis in Stufe B) ist größer 3. Das NCO/OH-Verhältnis in Stufe B) liegt z.B. im Bereich von größer 3 bis 20 und bevorzugt im Bereich von größer 3 bis 10.

Die Umsetzung des Polyesterpolyols mit der Reaktionsmischung erfolgt in üblicher Weise. Insbesondere reagieren dabei die Hydroxylgruppen des Polyesterpolyols mit den Isocyanatgruppen in der Reaktionsmischung, insbesondere mit Isocyanatgruppen von nicht umgesetzten Diisocyanaten und Isocyanatgruppen des in der Reaktionsmischung enthaltenen Isocyanat-funktionellen Polyurethan-Prepolymers.

Die Umsetzung des mindestens einen Polyesterpolyols mit der Reaktionsmischung enthaltend das Isocyanat-funktionelle Polyurethan-Prepolymer und nicht umgesetztes Diisocyanat kann z.B. bei Temperaturen im Bereich von 60 bis 160 °C, bevorzugt von 80 bis 140 °C, durchgeführt werden. Die Dauer der Umsetzung hängt naturgemäß von der eingesetzten Temperatur ab, kann aber z.B. 30 min bis 6 h, bevorzugt 30 min bis 3 h, bevorzugter 1 bis 1,5 h, betragen.

Durch das erfindungsgemäße zweistufige Verfahren wird ein Polyurethan-Heissschmelzklebstoff erhalten. Das Verfahren kann gegebenenfalls die Zugabe von einem oder mehreren Hilfsstoffen umfassen, die für solche Heissschmelzkleber üblich sind. Die Hilfsstoffe können zu jedem beliebigen Zeitpunkt zugegeben werden, z.B. in oder nach der Stufe A) und/oder in oder nach der Stufe B). In der Regel ist es zweckmäßig, den oder die optionalen Hilfsstoffe bei einer erhöhten Temperatur zuzugeben, um eine homogene Mischung zu erhalten, z.B. bei einer Temperatur von mindestens 60°C, bevorzugt mindestens 100°C und bevorzugter mindestens 110 °C.

Es ist bevorzugt, dass optionale Hilfsstoffe, sofern überhaupt eingesetzt, nicht mehr als 60 Gew.-%, bevorzugt nicht mehr als 50 Gew.-%, bezogen auf das Gesamtgewicht des Polyurethan-Heissschmelzklebstoffs ausmachen.

Beispiele für geeignete optionale Hilfsstoffe sind ein oder mehrere thermoplastische Polymere und/oder ein oder mehrere Additive. Die Additive sind z.B. ausgewählt aus Füllstoffen, Katalysatoren, Weichmachern, Haftvermittlern, UV-Absorptionsmitteln, UV- und Wärmestabilisatoren, Antioxidantien, Flammschutzmitteln, optischen Aufhellern, Pigmenten, Farbstoffen und Trocknungsmitteln. Beispiele für Katalysatoren sind Katalysatoren, die die Reaktion von Isocyanatgruppen mit Luftfeuchtigkeit katalysieren.

Bei den optionalen thermoplastischen Polymeren handelt es sich bevorzugt um nicht reaktive thermoplastische Polymere. Beispiele sind Homo- oder Copolymere von ungesättigten Monomeren, insbesondere aus der Gruppe umfassend Ethylen, Propylen, Butylen, Isobutylen, Isopren, Vinylacetat bzw. höheren Estern davon. Besonders geeignet sind Ethylenvinylacetat-Copolymer (EVA), ataktisches Poly-α-Olefin (APAO), Polypropylen (PP) und Polyethylen (PE).

Durch das erfindungsgemäße Verfahren wird ein Polyurethan-Heissschmelzklebstoff erhalten, der ein Isocyanat-funktionelles, insbesondere ein Isocyanatterminiertes, Polyurethan-Polymer bzw. Polyurethan-Prepolymer umfasst. Bei dem Polyurethan-Heissschmelzklebstoff handelt es sich insbesondere um einen feuchtigkeitshärtenden Polyurethan-Heissschmelzklebstoff, d.h. der Heissschmelzklebstoff kann durch Zugabe von Wasser, insbesondere Luftfeuchtigkeit, gehärtet werden. Es handelt sich somit um einen reaktiven Polyurethan-Heissschmelzklebstoff.

Der Polyurethan-Heissschmelzklebstoff weist vorzugsweise einen Gehalt an monomeren Diisocyanaten von nicht mehr als 1,0 Gew.-%, bevorzugter nicht mehr als 0,9 Gew.-% und besonders bevorzugt nicht mehr als 0,8 Gew.-%, bezogen auf das Gesamtgewicht des Heissschmelzklebstoffs, auf.

Der Polyurethan-Heissschmelzklebstoff der Erfindung ist aufschmelzbar, d. h., er weist bei der Applikationstemperatur eine genügend niedrige Viskosität auf, so das eine geeignete Applikation möglich ist, und er wird beim Erkalten schnell fest, so dass er schnell Kräfte aufnehmen kann, bereits bevor die Vernetzungsreaktion mit Luftfeuchtigkeit abgeschlossen ist.

Der erfindungsgemäße Polyurethan-Heissschmelzklebstoff eignet sich insbesondere als R-40 - klassifizierungsfreier sowie lagerungs- und verarbeitungsstabiler PUR-RHM.

Im Folgenden werden die Unterschiede zwischen einem einstufigen und einem zweistufigen Verfahren an Hand eines veranschaulichenden schematischen Beispiels näher erläutert. Darin werden lediglich zur besseren Veranschaulichung konkrete Angaben, z.B. bezüglich Ausgangskomponenten und NCO/OH-Verhältnisse, angeführt, dies soll den Umfang der Erfindung aber diesbezüglich in keiner Weise beschränken.

Bei einem herkömmlichen einstufigen Verfahren zur Herstellung eines Heissschmelzklebstoffs auf Basis einer reaktiven Polyurethan-Zusammensetzung (PUR-RHM) erfolgt die Umsetzung der Polyole und Polyisocyanate in einer Stufe. Bei der Umsetzung von Diisocyanaten mit Isocyanatgruppen etwa gleicher Reaktivität mit hydroxylgruppenhaltigen Verbindungen ist der verbleibende Gehalt an monomerem Diisocyanat im Reaktionsprodukt vom NCO/OH-Verhältnis der Reaktanten bei der Prepolymersynthese abhängig. Bei einem NCO/OH-Verhältnis von z.B. 2, wie es häufig für die Prepolymerzusammensetzung zweckmäßig ist, verbleiben etwa 25% des eingesetzten monomeren Diisocyanats als Monomer im Prepolymer. D.h. bei einer eingesetzten Menge von ca. 10-12 Gew.% Diisocyanat findet man in Übereinstimmung mit der Schulz-Flory-Statistik ca. 2 bis 3 Gew.% monomeres Diisocyanat wie MDI im Prepolymer.

Beim erfindungsgemäßen Zwei-Stufen-Prozess zur Herstellung eines Heissschmelzklebstoffes auf Basis einer reaktiven Polyurethan-Zusammensetzung (PUR-RHM) mit einem niedrigen Gehalt an monomeren Diisocyanat (MDI) verbleiben im ersten Schritt wie beim einstufigen Verfahren etwa 25% des eingesetzten monomeren Diisocyanats als Monomer im Prepolymer. Dieses reaktive Prepolymer mit einem NCO-Gehalt von z.B. etwa 2 bis 4 Gew.% wird dann in einem zweiten Schritt mit Polyesterpolyolen bei einem NCO/OH-Verhältnis von über 3 zur Reaktion gebracht. Durch geeignete Wahl des NCO/OH-Verhältnis kann so eine reaktive Polyurethan-Zusammensetzung (PUR-RHM) mit einem niedrigen Gehalt an monomeren Diisocyanat wie MDI realisiert werden.

Gleichzeitig entsteht durch diese stufenweise Reaktionsführung eine gewisse Regularität im Aufbau des Prepolymers mit polyester- und polyolreichen, insbesondere polyetherreichen, Domänen. Dadurch zeichnet sich dieser reaktiver Polyurethan-Klebstoff (PUR-RHM) überraschenderweise zusätzlich durch eine deutlich höhere Anfangsfestigkeit aus im Vergleich zu einem PUR-RHM hergestellt nach dem oben beschriebenen einstufigen Verfahren bei Einsatz gleicher Ausgangskomponenten.

Weiterhin umfasst die Erfindung ein Verfahren zum Verkleben von einem ersten Substrat mit einem zweiten Substrat, umfassend das Aufheizen eines erfindungsgemäßen Polyurethan-Heissschmelzklebstoffs; die Applikation des erwärmten Polyurethan-Heissschmelzklebstoffs auf das erste Substrat; das Kontaktieren des applizierten Polyurethan-Heissschmelzklebstoffs mit dem zweiten Substrat; und chemisches Aushärten des Polyurethan-Heissschmelzklebstoffs mit Wasser, insbesondere Luftfeuchtigkeit.

Das Aufheizen des Heissschmelzklebstoffs kann z.B. auf eine Temperatur im Bereich von 80°C bis 200°C, insbesondere von 120°C bis 160°C erfolgen. Das erste Substrat und das zweite Substrat können aus demselben oder unterschiedlichem Material sein.

Der Fachmann versteht, dass je nach verwendetem System, Temperatur und Reaktivität des Klebstoffs Vernetzungsreaktionen, und damit das chemische Aushärten, bereits während der Applikation beginnen kann. Der Hauptteil der Vernetzung und damit das chemische Aushärten im engeren Sinn finden jedoch gewöhnlich nach der Applikation statt.

Das erste und/oder zweite Substrat können bei Bedarf vor dem Applizieren des Heissschmelzklebstoffs vorbehandelt werden. Derartige Vorbehandlungen umfassen insbesondere physikalische und/oder chemische Reinigungs- und Aktivierungsverfahren, beispielsweise Schleifen, Sandstrahlen, Bürsten, Coronabehandlung, Plasmabehandlung, Beflammen, Anätzen oder dergleichen, oder Behandeln mit Reinigern oder Lösemitteln oder das Aufbringen eines Haftvermittlers, einer Haftvermittlerlösung oder eines Primers.

Das erste und zweite Substrat oder deren Oberfläche können z.B. aus Kunststoff, organischem Material wie Leder, Stoff, Papier, Holz, mit Harz gebundenem Holzwerkstoff, Harz-Textil-Kompositwerkstoff, Glas, Porzellan, Keramik sowie Metall und Metall-Legierung, insbesondere lackiertem oder pulverbeschichtetem Metall und Metall-Legierung sein.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefin (PO), insbesondere Polyethylen (PE) oder Polypropylen (PP), bevorzugt mit Plasma, Corona oder Flammen oberflächenbehandeltes PP oder PE.

Bevorzugt ist mindestens eines aus dem ersten und zweiten Substrat eine Kunststofffolie, eine Textilie oder Glas. Bevorzugte Materialien für das erste und/oder zweite Substrat sind transparente Materialien, insbesondere transparente Kunststofffolien. Ein anderes bevorzugtes transparentes Material ist Glas, insbesondere in Form einer Scheibe.

Der erfindungsgemäße Polyurethan-Heissschmelzklebstoff eignet sich insbesondere für industrielle Anwendungen, z.B. im Fahrzeugbau, insbesondere im Automobilbau, in der Textilindustrie, z.B. als Textilklebstoff, und in der Verpackungsmittel-Industrie, z.B. als Folienklebstoff.

Insbesondere eignet sich der erfindungsgemäße Polyurethan-Heissschmelzklebstoff für Verklebungen, in welchen die Verklebungsstelle sichtbar ist. So eignet er sich insbesondere für die Verklebung von Glas, insbesondere im Fahrzeug- und Fensterbau, und für das Verkleben von Klarsichtverpackungen.

Die Dicke der aus dem erfindungsgemäßen Polyurethan-Heissschmelzklebstoff gebildeten Klebschicht ist z.B. 10 µm oder mehr, bevorzugt liegt die Dicke im Bereich von 10 bis 1000 µm, bevorzugter von 80 bis 500 µm.

Die Erfindung betrifft auch Artikel, die nach dem erfindungsgemäßen Verklebungsverfahren verklebt werden. Derartige Artikel sind insbesondere Artikel der Transportmittelindustrie, insbesondere der Automobilindustrie, Möbel- oder Textilindustrie.

Beispiele für verklebte Artikel sind Automobil-Innenausstattungsteile, wie Dachhimmel, Sonnenblende, Instrumententafel, Türseitenteil, Hutablage und dergleichen; Holzfaserwerkstoffe aus dem Dusch- und Badbereich; Möbel-Dekorfolien, Membranfolien mit Textilien wie Baumwolle, Polyesterfolien im Bekleidungsbereich oder Textilien mit Schäumen für Autoausstattungen. Weitere Beispiele für verklebte Artikel sind Artikel aus der Verpackungsindustrie, insbesondere eine Klarsichtverpackung.

Es folgen Beispiele zur weiteren Erläuterung der Erfindung, die aber den Gegenstand der Erfindung in keiner Weise beschränken sollen.

### Beispiele

Soweit nicht anders angegeben, beziehen sich Mengenangaben auf das Gewicht. In den Beispielen wurden folgende Substanzen verwendet.

| | | |
|---|---|---|
| Diisocyanat | 4,4'-Diphenylmethandiisocyanat (MDI) | Bayer |
| Polyetherpolyol | Lineares Polypropylenetherpolyol, mittleres Molekulargewicht = 2000 g/mol | Bayer |
| Polymethacrylat A | Dynacoll AC Typ1* | Evonik |
| Polymethacrylat B | Dynacoll AC Typ2* | Evonik |
| Polymethacrylat C | Dynacoll AC Typ3* | Evonik |
| Polyesterpolyol | Kristallines Polyesterpolyol, mittleres Molekulargewicht = 3500 g/mol | Evonik |

| | | |
|---|---|---|
| * mittleres Molekulargewicht im Bereich von 20000 bis 150000 g/mol, Copolymer umfassend Methylmethacrylat und n-Butylmethacrylat. | | |

### Messmethoden

Zur Charakterisierung der hergestellten feuchtigkeitshärtenden Heissschmelzkleber wurden folgende Messmethoden eingesetzt.

### Viskosität

Die Viskosität wurde bei 130°C mittels Rheomat (Brookfield, Thermosel, Spindel 27, Scherrate 1 min⁻¹) gemessen.

### Offene Zeit

Der Schmelzkleber wurde 30 min bei 140°C vorgewärmt. Währenddessen wurde eine Rakel auf einen Sicol-Papierstreifen (Länge etwa 30 cm) gelegt. Beide wurden dann auf eine Heizplatte gelegt und vorgewärmt. Es wurden mindestens 20 Teststreifen des Sicol-Papiers (10cm x 1cm) vorbereitet. Wenn alles aufgewärmt ist, wurden etwa 20g des Klebers in die Rakel gebracht und ein Film von etwa 30cm gebildet. Das Papier wurde dann sofort von der Heizplatte entfernt und auf eine Sperrholzplatte, bevorzugt Buche, gelegt, die auf Raumtemperatur (23°C) konditioniert worden war. Zu diesem Zeitpunkt wird die Zeitmessung gestartet. Alle 10 s wurde ein schmaler Papierstreifen auf den Kleber gedrückt (leichter Fingerdruck) und langsam wieder entfernt, um die beiden Papierstreifen zu trennen. Sobald das Bruchverhalten von kohäsiv zu teilweise adhäsiv wechselte, ist das Ende der Offenzeit erreicht. Dieser Zeitpunkt wird in s oder min protokolliert.

### Anfangsfestigkeit

Die Anfangsfestigkeit des Schmelzklebers wurde mit einem Zugscher-Holzprüfling getestet. Das Standardholz ist Buche (Fagus sylvatica) (Prüfling: 2 Stücke: 100mm x 25mm x 5mm, Dicke der Klebstoffschicht: 1 mm). Die Anfangsfestigkeit wurde 6, 10, 20 und 30 min nach dem Zusammenbau der Prüflinge gemessen. Die Kraft bei Bruch des Prüflings wurde bei einer definierten Testgeschwindigkeit bestimmt. Standardbedingungen: 23°C / 50% rel. Feuchtigkeit, Traversengeschwindigkeit: 10mm/min

Die Scherfestigkeit des Überlappstoßes τ [MPa] wurde dann bestimmt gemäß: τ = Fmax / A, worin Fmax = maximale Kraft, A = Klebfläche

### Restmonomer

Der Gehalt an im Heissschmelzkleber verbliebenen, nicht umgesetzten Diisocyanat wurde bestimmt mittels HPLC (Detektion über Photodiodenarray) und ist angegeben in Gew.-% bezogen auf den gesamten untersuchten Heisschmelzklebstoff.

### Durchhärtung

Die Durchhärtegeschwindigkeit des untersuchten Heisschmelzklebstoffs wurde an einem 500 µm Klebstofffilm getestet. Hierzu wurde der Klebstoff für 30 min auf 140°C vorgewärmt. Ein Sicol-Papier (B700 weiß, Breite ca. 6 cm, Länge ca. 60 cm Laufenberg & Sohn KG) und eine Rakel wurde auf einer Heizplatte von 150°C vorgewärmt. 20 g des vorgewärmten Klebstoffs werden in die Rakel gegeben und ein 500 µm Klebstofffilm mit einer Länge von etwa 60 cm auf dem auf der Heizplatte befindlichen Sicol-Papier appliziert. Dann wird das Papier von der Platte genommen. Wenn der Klebstoff erstarrt ist (Startpunkt), wird der Film in einer Klimakammer (23°C, 55% rel. Feuchtigkeit) gelagert. In bestimmten Zeitintervallen wird ein schmaler Streifen von 10 cm x 1 cm von dem Film herausgeschnitten und auf eine Heizplatte von 150°C gelegt. Dies wird solange wiederholt, bis der Streifen auf der Heizplatte nicht mehr aufschmilzt, was anzeigt, dass der Klebstoff durchgehärtet ist. Das Zeitintervall vom Startpunkt bis zu dem Zeitintervall, bei dem der entnommene Streifen nicht aufschmilzt, ist die Dauer (in Stunden) für die Durchhärtung.

### Zugfestigkeit und Bruchdehnung

In Anlehnung an DIN 53504 wurden aus einem 500 µm dicken ausgehärteten Film (Härtung 7 Tage bei 23°C/50% RH) der Probe fünf 2,5 x 10 cm grosse, rechteckige Prüflinge geschnitten. Diese wurden in die Zugprüfmaschine eingespannt (Zwick Z 020) und mit einer Geschwindigkeit von 100 mm/min auseinander gezogen (Prüfbedingung 23°C/50% RH). Gemessen wurde die von der Probe maximal aufgenommene Zugkraft. Daraus wurden Zugfestigkeit und Bruchdehnung bestimmt, wobei aus den fünf Prüflingen jeweils der Mittelwert bestimmt wurde.

### Versuche

Gemäß nachfolgenden Versuchsbeschreibungen wurden Polyurethan-Heissschmelzklebstoffe gemäß einem herkömmlichen einstufigen Verfahren (Referenzbeispiel) und dem erfindungsgemäßen zweistufigen Verfahren (Beispiel) hergestellt. Die in diesen Beispielen eingesetzten Komponenten und deren Mengenanteile sind in Tabelle 1 gezeigt. Die erhaltenen Heissschmelzklebstoffe wurden mit den genannten Messmethoden untersucht. Die Ergebnisse sind in Tabelle 2 gezeigt.

**Tabelle 1**

| | Ref.-bsp. (1-stufig) | Bsp. (2-stufig) |
|---|---|---|
| Polyetherpolyol [Gew%] | 37,2 | 38,3 |
| Polymethacrylat A [Gew%] | 8,8 | 9,0 |
| Polymethacrylat B [Gew%] | 15,3 | 15,8 |
| Polymethacrylat C [Gew%] | 4,4 | 4,5 |
| Polyesterpolyol [Gew%] | 21,9 | 22,2 |
| Diisocyanat MDI [Gew%] | 12,5 | 10,1 |

**Tabelle 2**

| | Ref.-bsp. (1-stufig) | Bsp. (2-stufig) |
|---|---|---|
| Viskosität bei 130°C [mPa*s] | 15.000 | 23.000 |
| Offene Zeit [min] | 2-3 | 1 |
| Anfangsfestigkeit 6min [MPa] | 0,02 | 0,14 |
| Anfangsfestigkeit 10min [MPa] | 0,04 | 0,40 |
| Anfangsfestigkeit 20min [MPa] | 0,21 | 0,63 |
| Anfangsfestigkeit 30min [MPa] | 0,33 | 0,61 |
| Durchhärtung [h] | <22 | <22 |
| Festigkeit [MPa] | 9,0 | 10,0 |
| Bruchdehnung [%] | 600 | 660 |
| Restmonomer MDI [Gew.%] | 2,7 | 0,8 |

### Referenzbeispiel (einstufiges Verfahren)

Es wurde eine Polyether/Polyacrylat-Mischung in den in Tabelle 1 angegebenen Mengen in einem 1 Liter-Reaktionsgefäß mit Antihaftbeschichtung und einem 4-Hals-Planschliffdeckel 25 vorgelegt. Es wurde in einem Ölbad mit Temperatursteuerung bei 160°C für 2 Stunden gemischt. Das so erhaltene flüssige Polyolgemisch wurde mit Polyesterpolyol gemischt und eine Stunde lang bei 140°C unter Rühren im Hochvakuum entwässert. Dann wurde MDI im Molverhältnis NCO/OH = 2:1 zum Polyol in das Reaktionsgefäß zugegeben und 1 Stunde unter Rühren bei gehaltener Temperatur (140°C) umgesetzt. Das gebildete Reaktionsprodukt wurde bei Raumtemperatur unter Ausschluss von Feuchtigkeit aufbewahrt.

### Beispiel (zweistufiges Verfahren)

Es wurde eine Polyether/Polyacrylat-Mischung in den in Tabelle 1 angegebenen Mengen in einem 1 Liter-Reaktionsgefäß mit Antihaftbeschichtung und einem 4-Hals-Planschliffdeckel 25 vorgelegt. Es wurde in einem Ölbad mit Temperatursteuerung bei 160°C für 2 Stunden gemischt. Danach wurde MDI im Molverhältnis NCO/OH = 2:1 zum Polyol/Polyacrylat-Gemisch in das Reaktionsgefäß zugegeben und 1 Stunde bei 140°C unter Rühren bei gehaltener Temperatur umgesetzt. Zu diesem Prepolymeren wurde bei 140°C das geschmolzene und entwässerte Polyesterpolyol zugegeben und 1 Stunde unter Rühren bei gehaltener Temperatur umgesetzt. Das gebildete Reaktionsprodukt wurde bei Raumtemperatur unter Ausschluss von Feuchtigkeit aufbewahrt.

## Patentansprüche

1. Zweistufiges Verfahren zur Herstellung eines Polyurethan-Heissschmelzklebstoffs, umfassend
A) das Umsetzen von mindestens einem Polyol mit mindestens einem Diisocyanat, wobei das NCO/OH-Verhältnis größer 1,5 ist, um eine Reaktionsmischung enthaltend ein Isocyanat-funktionelles Polyurethan-Prepolymer und nicht umgesetztes Diisocyanat zu erhalten, und
B) das Umsetzen der in Stufe A) erhaltenen Reaktionsmischung enthaltend das Isocyanat-funktionelle Polyurethan-Prepolymer und nicht umgesetztes Diisocyanat mit mindestens einem Polyesterpolyol, wobei das NCO/OH-Verhältnis größer 3 ist.

2. Verfahren nach Anspruch 1, **dadurch gekennzeichnet, dass** das NCO/OH-Verhältnis in Stufe A) im Bereich von größer 1,5 bis 2,5, bevorzugt 1,7 bis 2,2, liegt und/oder das NCO/OH-Verhältnis in Stufe B) im Bereich von größer 3 bis 20, bevorzugt größer 3 bis 10, liegt.

3. Verfahren nach Anspruch 1 oder Anspruch 2, **dadurch gekennzeichnet, dass** das Polyol ein Polyetherpolyol, ein Polyesterpolyol, ein Polycarbonatpolyol, Rizinusöl, ein Rizinusölderivat, ein hydroxyfunktionelles Polybutadien oder eine Mischung von zwei oder mehr dieser Polyole ist, wobei ein Polyetherpolyol bevorzugt ist.

4. Verfahren nach irgendeinem der Ansprüche 1 bis 3, **dadurch gekennzeichnet, dass** das Polyol ein Polypropylenoxid oder ein Ethylenoxid-verkapptes Polypropylenoxid ist.

5. Verfahren nach irgendeinem der Ansprüche 1 bis 4, **dadurch gekennzeichnet, dass** das Diisocyanat ein monomeres Diisocyanat ist, wobei das Diisocyanat bevorzugt Diphenylmethandiisocyanat (MDI) ist.

6. Verfahren nach irgendeinem der Ansprüche 1 bis 5, **dadurch gekennzeichnet, dass** das Polyesterpolyol ein flüssiges, amorphes oder kristallines Polyesterpolyol ist, wobei das Polyesterpolyol bevorzugt ein kristallines Polyesterpolyol ist.

7. Verfahren nach irgendeinem der Ansprüche 1 bis 6, **dadurch gekennzeichnet, dass** mindestens ein Polyacrylat oder Polymethacrylat zugemischt wird, wobei die Umsetzung des mindestens einen Polyols mit dem mindestens einen Diisocyanat bevorzugt in Anwesenheit von dem mindestens einem Polyacrylat oder Polymethacrylat durchgeführt wird.

8. Verfahren nach Anspruch 7, **dadurch gekennzeichnet, dass** das Polyacrylat oder Polymethacrylat ein Homopolymer oder Copolymer von mindestens einem Acrylsäureester, Methacrylsäureester, hydroxyfunktionellen Acrylsäureester oder hydroxyfunktionellen Methacrylsäureester oder einer Kombination davon sowie gegebenenfalls mindestens einem weiteren Comonomer ist, wobei das Polyacrylat oder Polymethacrylat bevorzugt ein Copolymer von Methylmethacrylat und n-Butylmethacrylat und gegebenenfalls mindestens einem weiteren Comonomer ist.

9. Verfahren nach irgendeinem der Ansprüche 7 bis 8, **dadurch gekennzeichnet, dass** in Stufe A) das Polyol, insbesondere das Polyetherpolyol, in dem Polyacrylat oder Polymethacrylat gelöst und anschließend das Diisocyanat zur Mischung gegeben wird.

10. Verfahren nach irgendeinem der Ansprüche 1 bis 9, **dadurch gekennzeichnet, dass** die Umsetzung in Stufe A) bei einer Temperatur in einem Bereich von 60 °C bis 160 °C durchgeführt wird und/oder die Umsetzung in Stufe B) bei einer Temperatur in einem Bereich von 60 °C bis 160 °C durchgeführt wird.

11. Verfahren nach irgendeinem der Ansprüche 1 bis 10, **dadurch gekennzeichnet, dass** in oder nach der Stufe A) und/oder in oder nach der Stufe B) ferner ein oder mehrere thermoplastische Polymere und/oder ein oder mehrere Additive, insbesondere ausgewählt aus Füllstoffen, Katalysatoren, Weichmachern, Haftvermittlern, UV-Absorptionsmitteln, UV- und Wärmestabilisatoren, Antioxidantien, Flammschutzmitteln, optischen Aufhellern, Pigmenten, Farbstoffen und Trocknungsmittel, zugegeben werden.

12. Polyurethan-Heissschmelzklebstoff, erhältlich nach einem Verfahren nach irgendeinem der Ansprüche 1 bis 11.

13. Verfahren zum Verkleben von einem ersten Substrat mit einem zweiten Substrat, umfassend das Aufheizen eines Polyurethan-Heissschmelzklebstoffs nach Anspruch 12; die Applikation des erwärmten Polyurethan-Heissschmelzklebstoffs auf das erste Substrat; das Kontaktieren des applizierten Polyurethan-Heissschmelzklebstoffs mit dem zweiten Substrat; und chemisches Aushärten des Polyurethan-Heissschmelzklebstoffs mit Wasser, insbesondere Luftfeuchtigkeit.

14. Artikel, welcher nach einem Verfahren nach Anspruch 13 verklebt wurde.

15. Verwendung eines Polyurethan-Heissschmelzklebstoffs nach Anspruch 12 für industrielle Verklebungen, insbesondere im Fahrzeugbau, in der Textilindustrie oder in der Verpackungsmittelindustrie.
